# FASCICULE DE BREVET EUROPEEN

(11) **EP 2 855 207 B1**
(45) Date de publication et mention de la délivrance du brevet: **15.07.2020**
(21) Numéro de dépôt: 13731840.8
(22) Date de dépôt: 30.05.2013
(51) Int. Cl.: B60R 1/00, B60R 11/00, B60J 1/00, F16B 11/00, F16S 1/08

(54) **VITRAGE DE VÉHICULE AVEC UNE EMBASE POUR LA FIXATION D'ACCESSOIRES ET PROCEDE D'ASSEMBLAGE**
SCHEIBE MIT EINEM BEFESTIGUNGSELEMENT ZUM ANBRINGEN VON ZUBEHÖRTEILEN UND MONTAGEVERFAHREN
WINDOW PANE WITH FASTENING DEVICE FOR ATTACHING ACCESSORY PARTS AND ASSEMBLY METHOD

(30) Priorité: 30.05.2012 FR 1254988
(43) Date de publication de la demande: 08.04.2015
(73) Titulaire: SAINT-GOBAIN GLASS FRANCE, 92400 Courbevoie (FR)
(72) Inventeur: LAMOUREUX, Laurent, F-60170 Ribecourt-Dreslincourt (FR)
(74) Mandataire: Saint-Gobain Recherche
(86) Numéro de dépôt international: PCT/FR2013/051218
(87) Numéro de publication internationale: WO 2013/178953

(56) Documents cités:
- EP-A1- 1 491 404
- EP-A2- 1 431 146
- EP-A2- 2 179 894
- WO-A2-2007/022295
- DE-A1-102004 061 362
- DE-A1-102006 039 065
- DE-A1-102010 003 955
- DE-U1-202007 011 489
- US-A1- 2007 158 378

## Description

La présente invention concerne la fixation d'accessoire(s) à des vitrages de véhicule et plus particulièrement des vitrages de véhicules automobiles.

Une embase est fixée habituellement contre la face intérieure d'un élément vitré d'un vitrage de véhicule, afin de permettre d'attacher mécaniquement un (ou plusieurs) accessoire(s) à l'embase, a proximité immédiate de cette face intérieure.

L'accessoire peut être par exemple un capteur de pluie et/ou de luminosité, ou encore un détecteur ou une caméra.

Le positionnement et la fixation précise de l'embase contre la face intérieure de l'élément vitré permet alors un positionnement et une attache précise de l'accessoire contre, ou quasiment contre, cette face intérieure.

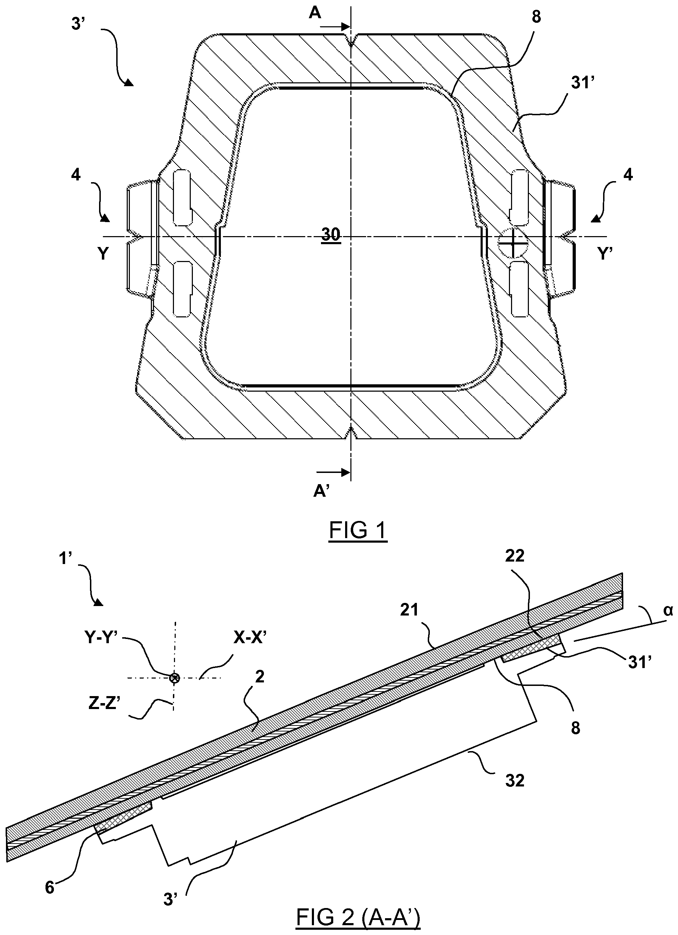

Une embase 3' de l'art antérieur est illustrée de face sur la figure 1 ; un vitrage 1' comportant un élément vitré 2 et cette embase 3' pour l'attachement réversible (attache mécanique) d'un accessoire audit élément vitré 2 est illustrée en figure 2 qui est une vue en coupe selon AA' de la figure 1.

L'embase 3' comporte un trou 30 pour le passage dudit accessoire, afin qu'une surface dudit accessoire soit en vis-à-vis de la face intérieure 22 dudit élément vitré.

L'embase 3' présente une face extérieure 31' non plate (ou « bombée »), avec un rayon de courbure non infini dans deux directions perpendiculaires, qui est fixée, par fixation chimique, en vis-à-vis d'une face intérieure 22 non plate (ou « bombée ») dudit élément vitré 2 qui elle aussi présente un rayon de courbure non infini dans deux directions perpendiculaires. La face extérieure 31' est située à la périphérie du trou 30 ; elle entoure complètement le trou.

L'embase 3' présente par ailleurs une face intérieure 32 comportant des moyens d'attachement 4 pour permettre d'attacher mécaniquement d'une manière réversible ledit accessoire à ladite embase 3' après fixation de l'embase 3' à la face intérieure 22 de l'élément vitré 2. Ces moyens d'attachement sont disposés de part et d'autre de ladite embase, selon l'axe horizontal transversal Y-Y' dudit vitrage. Ils permettent d'enlever l'accessoire et de le réutiliser lorsque le vitrage du véhicule est endommagé et est changé par un vitrage comportant une autre embase compatible avec cet accessoire.

La face extérieure 31' de l'embase est particulière : elle n'est pas au contact de la face intérieure 22 de l'élément vitré car elle est délimitée tout autour du trou 30 par un bossage périphérique 8 qui lui est contact avec la face intérieure 22 de l'élément vitré et elle va en s'évasant de manière centrifuge, c'est-à-dire en s'éloignant du centre du bossage périphérique 8 vers sa périphérie.

En coupe, l'angle α entre la face extérieure 31' de l'embase et la face intérieure 22 de l'élément vitré est, par exemple, de l'ordre de 15 °.

L'embase 3' est fixée par collage à la face intérieure de l'élément vitré : une couche de polyuréthane 6 est disposée contre toute la face extérieure 31', puis, alors que le polyuréthane n'a pas encore complètement polymérisé, l'embase 3' est appliquée contre la face intérieure 22 de l'élément vitré.

Le bossage périphérique 8 empêche normalement le polyuréthane de venir dans le trou 30 car sinon, sa présence risque de gêner voire empêcher, le fonctionnement adéquat de l'accessoire.

Souvent, le polyuréthane "déborde" quelque peu au-delà de la face extérieure 31' de l'embase ; l'emplacement de l'embase est donc prévu de telle sorte que ce débordement ne soit pas visible, ni de l'intérieur du véhicule, ni de l'extérieur ; cet emplacement est ainsi généralement prévu sous la couche d'émail périphérique du vitrage, ou analogue, en direction de l'intérieur du véhicule.

L'embase doit être positionnée et collée avec précision car un trou est également ménagée dans la bande d'émail ou analogue, pour être en vis-à-vis du trou 30 de l'embase et permettre le fonctionnement de l'accessoire sans que la bande d'émail ou analogue ne gêne.

Cette opération de collage est réalisée dans un atelier particulier, en reprise, lorsque que le vitrage est quasiment terminé, avant sa livraison pour positionnement et fixation dans la baie de la carrosserie qu'il doit fermer.

Elle est longue car la polymérisation prend du temps et le vitrage ne peut être bougé pendant ce temps pour ne pas risquer de modifier la position de l'embase. Une période de 4 jours d'attente est généralement observée avant que le vitrage ne soit saisi.

Cette opération pose des contraintes environnementales et sécuritaires importantes en raison de la nocivité pour le corps humain des composants du polyuréthane.

De plus pour que l'épaisseur de colle soit identique partout, il faut impérativement que l'embase soit spécifique du modèle d'élément vitré : chaque série d'embase doit être conçue avec une configuration de surface extérieure spécifique de la configuration de la surface intérieure de l'élément vitré à l'endroit où les embases d'une série d'éléments vitrés doivent être positionnées.

En outre, cette opération pose des problèmes de répétabilité car la face intérieure de l'élément vitré n'est pas toujours exactement identique, dans le repère habituel X-X', Y-Y', Z-Z' du véhicule, d'un vitrage à l'autre d'une même série. Il peut ainsi arriver qu'au stade ultime, avant livraison, un vitrage devienne défectueux en raison du débordement du polyuréthane dans le trou de l'embase, ce qui engendre une mise au rebus onéreuse.

L'art antérieur connaît les demandes de brevet DE 10 2006 039 065 et EP 1 143 146.

L'art antérieur connaît par ailleurs des embases de rétroviseurs intérieurs présentant une surface extérieure de forme générale ronde, sans trou ; l'attachement du rétroviseur est opérée grâce à des moyens d'attachement prévus sur la surface intérieure de l'embase.

Parfois, quatre bandes adhésives sont utilisées pour fixer une telle embase à la face intérieure d'un élément vitré :
- deux bandes adhésives présentant chacune une forme allongée et disposées toutes les deux allongées selon l'axe horizontal transversal Y-Y' dudit vitrage
- deux bandes adhésives présentant chacune une forme allongée et disposées toutes les deux allongées selon l'axe vertical Z-Z' dudit vitrage.

La présente invention a pour but de remédier aux inconvénients de la technique antérieure en proposant un mode de fixation particulier d'une embase pour accessoire, à trou, plus simple à mettre en œuvre, moins contraignant en termes de santé et d'environnement, moins onéreux, plus fiable et avec une configuration d'embase unique qui peut être utilisée pour des éléments vitrés de formes différentes.

Par ailleurs, la présente invention entend proposer un procédé plus facile à mettre en œuvre et plus fiable de fixation de l'embase à l'élément vitré.

La présente invention repose ainsi sur une solution où deux, et uniquement deux bandes adhésives sont utilisées.

Ainsi suivant l'invention, un vitrage de véhicule comporte un élément vitré et au moins une embase pour l'attachement réversible d'un accessoire audit élément vitré, ladite embase comportant un trou pour le passage dudit accessoire, afin qu'une surface dudit accessoire soit en vis-à-vis de la face intérieure dudit élément vitré, ladite embase présentant une face extérieure non plate, qui est fixée en vis-à-vis d'une face intérieure non plate dudit élément vitré.

Ce vitrage est remarquable en ce que ladite face extérieure comporte uniquement deux bandes adhésives présentant chacune une forme allongée et disposées toutes les deux allongées selon l'axe horizontal transversal Y-Y' dudit vitrage (qui est aussi celui dudit véhicule), de préférence de part et d'autre du trou pour plus de fiabilité.

La « forme allongée » signifie ici que la longueur d'une bande selon l'axe horizontal transversal Y-Y' est plus grande que sa hauteur selon l'axe vertical Z-Z'.

Bien sûr, le fait de limiter le nombre de bandes adhésives à deux engendre un inconvénient majeur : il augmente le risque que l'adhérence globale de l'embase à l'élément vitré soit insuffisante car si une bande est défectueuse, c'est la moitié de l'adhérence qui est affectée ; toutefois, cet inconvénient est largement compensé par les avantages procurés par le positionnement spécifique des deux bandes adhésives :
- comme les deux bandes adhésives sont disposées allongées selon la direction du vitrage selon laquelle il y a le moins de dispersion de dimension d'un élément vitré à un autre d'une même série, cela limite le risque qu'une embase n'adhère pas correctement à vitrage en raison d'une imperfection de la courbure de ce vitrage à l'endroit prévu pour le positionnement de l'embase ;
- une série identique d'embases peut être utilisée pour des série d'éléments vitrés différents lorsque ces différents éléments vitrés présentent tous un grand rayon de courbure (notamment égal ou supérieure à 2 mètres) selon l'axe horizontal transversal Y-Y' à l'endroit prévu du positionnement de l'embase.

En outre, cela coûte moins cher de ne positionner que deux bandes adhésives.

L'embase du vitrage selon l'invention présente par ailleurs de préférence une face intérieure comportant des moyens d'attachement pour permettre d'attacher mécaniquement d'une manière réversible ledit accessoire à ladite embase, ces moyens d'attachement étant, de préférence, disposés de part et d'autre de ladite embase, selon l'axe horizontal transversal Y-Y' dudit vitrage.

Les axes X-X', Y-Y' et Z-Z' auxquels il est fait référence dans le présent document sont les axes utilisés habituellement dans le domaine des véhicules :
- l'axe X-X' désigne l'axe horizontal longitudinal central du véhicule, celui selon lequel le véhicule avance ;
- l'axe Y-Y' désigne l'axe horizontal transversal du véhicule, qui est perpendiculaire à l'axe X-X' ; et
- l'axe Z-Z' désigne l'axe vertical du véhicule, qui est perpendiculaire aux deux précédents.

Par « face non plate », au sens de la présente invention, il faut comprendre que la face présente deux rayons de courbure : un premier rayon de courbure non infini (c'est-à-dire fini) dans une première direction, la direction latérale Y-Y' et un second rayon de courbure non infini dans une seconde direction qui est perpendiculaire à la première, la hauteur Z-Z'.

Par « attache » ou « attachement » au sens de la présente invention, il faut comprendre les attaches mécaniques, qui s'attachent et se détachent manuellement ou à l'aide d'un outil mécanique.

Par « fixation » au sens de la présente invention, il faut comprendre les fixations chimiques, qui engendrent des modifications moléculaires irréversibles, sauf à rompre la liaison et à rendre l'embase inutilisable.

Dans une variante, ladite face extérieure de l'embase suit la même courbure que ladite face intérieure de l'élément vitré à l'endroit où l'embase est fixée à l'élément vitré : les rayons de courbures sont ainsi identiques dans cette zone.

Ainsi, la face extérieure de l'embase est facile à concevoir : il suffit de prendre les côtes de la face intérieure de l'élément vitré dans cette zone ; il n'est plus nécessaire de prévoir que la face extérieure de l'embase soit en s'évasant vers sa périphérie.

Dans une variante spécifique, chaque bande adhésive est à base d'un mélange de résine époxy et de résine acrylique ; comme l'adhésion définitive de ce type de matière nécessite un apport de chaleur dans des conditions très proches des conditions nécessaires à la fabrication d'un vitrage feuilleté, il n'est alors plus nécessaire de prévoir une phase particulière de polymérisation : l'adhésion définitive s'opère en « temps masqué », pendant la fabrication du vitrage feuilleté lorsque l'élément vitré est un élément vitré feuilleté.

La face extérieure de l'embase présente une forme d'anneau tout autour du trou de l'embase. Dans une variante particulière, ladite face extérieure de l'embase ne comporte pas de bossage périphérique autour du trou ; l'embase comporte ainsi moins de matière, elle est plus facile à concevoir, plus légère et la face extérieure de l'embase s'adapte mieux aux éventuels défauts de courbure de la surface intérieure de l'élément vitré.

Dans une variante toute particulière, les bandes adhésives présentent les mêmes dimensions de longueur I, hauteur h et épaisseur e, afin de faciliter la pose ; comme cela il n'y a pas besoin de deux références distinctes en atelier de fixation de l'embase pour les deux bandes : une seule référence suffit.

Il est préférable par ailleurs que chaque bande soit d'un seul tenant ; dans l'absolu, il n'est pas exclu que chaque bande soit en plusieurs parties, mais cela est moins pratique.

De préférence, les bandes adhésives sont positionnées sensiblement parallèles sur la face extérieure de l'embase, afin de faciliter le positionnement des bandes préalablement à la fixation de l'embase à l'élément vitré.

De préférence par ailleurs, les bandes adhésives sont positionnées horizontalement de part et d'autre du trou.

Dans une variante, au moins une bande adhésive comporte à ses deux extrémités longitudinales selon l'axe horizontal transversal Y-Y', un retour orienté selon l'axe vertical Z-Z'.

Dans une variante toute particulière les deux bandes adhésives comportent à leurs deux extrémités longitudinales selon l'axe horizontal transversal Y-Y', un tel retour et les bandes adhésives sont positionnées tête-bêche.

De préférence en outre, la surface totale des deux bandes adhésives représente environ la moitié (± 1/10^{e}) de la surface de la face extérieure de l'embase.

Chaque bande adhésive peut présenter une surface comprise entre 3 et 9 cm² et de préférence de l'ordre de 6 cm² pour une surface de face extérieure d'embase de l'ordre de 24 cm².

La surface de face extérieure d'embase est la surface matériellement en vis-à-vis proche de la face intérieure de l'élément vitré (hors surface du trou de l'embase pour le passage de l'accessoire). La face extérieure peut être en forme générale de parallélogramme, de rectangle ou carré ou losange ; elle peut éventuellement être ronde ou ne pas être ronde. Le trou peut être au centre de la face extérieure de l'embase avec une surface extérieure présentant à peu près la même largeur tout autour du trou, mais ce n'est pas une nécessité.

La présente invention concerne également un procédé de fabrication d'un vitrage selon l'invention comportant un élément vitré et au moins une embase pour la fixation d'un accessoire, ladite embase étant collée à la face intérieure de l'élément vitré grâce à uniquement deux bandes adhésives située sur la face extérieure de l'embase, lesdites bandes adhésives présentant chacune une forme allongée et étant disposées toutes les deux allongées selon l'axe horizontal transversal Y-Y' dudit vitrage.

De préférence, ledit élément vitré est un élément vitré feuilleté et la fixation de l'embase est opérée lors de l'opération de feuilletage/assemblage des feuilles de l'élément vitré ensemble.

La présente invention permet de réaliser une liaison très fiable entre l'élément vitré et l'accessoire (ou les accessoires) attaché(s) à cet élément vitré.

Ainsi, pour un vitrage et d'un vitrage à un autre d'une même série, d'une part la fixation de chaque embase est sûre et certaine, mais en outre, elle est rapide et moins onéreuse.

Même si la matière qui permet la fixation de l'embase à l'élément vitré coûte plus cher, ce surcoût est compensé par le fait qu'il n'est plus nécessaire de prévoir une étape d'attente de polymérisation de la couche utilisée auparavant et par la diminution du risque qu'un vitrage devienne non conforme pour son utilisation prévue à cause d'une mauvaise manipulation de la couche utilisée auparavant.

On décrira ci-après, à titre d'exemple non limitatif, une forme d'exécution de la présente invention, en référence aux dessins annexés sur lequel :
- la figure 1 est une vue de face d'une embase de l'art antérieur pour l'attachement d'un accessoire à un élément vitré montrant la face intérieure (hachurée bien que n'étant pas en coupe) ;
- la figure 2 est une vue en coupe partielle selon AA' de la figure 1 faisant en outre apparaître partiellement en coupe l'élément vitré et la couche de polyuréthane (seul le contour de l'embase est illustré) ;
- la figure 3 est une vue de face d'une embase selon l'invention comportant deux bandes adhésives ;
- la figure 4 est une vue en coupe partielle selon BB' de la figure 3 faisant en outre apparaître partiellement en coupe l'élément vitré et les deux bandes adhésives ;
- la figure 5 est une vue de face d'une variante de réalisation de l'embase selon l'invention comportant deux bandes adhésives présentant chacune un retour à leurs deux extrémités longitudinales selon l'axe horizontal transversal Y-Y' ;
- la figure 6 est une vue en coupe partielle d'un plateau permettant le transport d'embases selon l'invention ; et
- la figure 7 illustre une vue en perspective d'un plateau à logements doubles dans chacun desquels il est possible de disposer deux embases différentes.

Dans ces figures, les proportions entre les différents éléments sont respectées sur chaque figure mais les éléments en arrière plan ne sont en général pas représentés, afin de faciliter leur lecture.

Les figures 1 et 2 illustrent un vitrage de véhicule 1' de l'art antérieur, comprenant un élément vitré 2 et une embase 3' de l'art antérieur.

Le vitrage 1', est destiné à fermer une baie réalisant une séparation entre un espace intérieur du véhicule et un espace extérieur au véhicule. L'élément vitré 2 présente ainsi une face intérieure 21, destinée à être tournée vers l'espace intérieur, une face extérieure 23 destinée à être tournée vers l'espace extérieur, ainsi qu'un chant 22 périphérique.

Ainsi, lorsqu'il est fait référence aux notions de « intérieur » et « extérieur » dans le présent document, c'est toujours en référence à cette considération.

L'élément vitré peut être monolithique, c'est-à-dire constitué d'une feuille de matière unique, ou être composite, c'est-à-dire constitué de plusieurs feuilles de matière entre lesquelles est insérée au moins une couche de matière adhérente dans le cas des vitrages/éléments vitrés feuilletés. La (ou les) feuille(s) de matière peut (ou peuvent) être minérale(s), notamment en verre, ou organique(s), notamment en matière plastique.

Dans le cas d'un vitrage pour véhicule, le vitrage présente généralement au moins partiellement à sa périphérie, tout autour du bord de la face intérieure 21, une bande d'ornementation (non illustrée). Cette bande d'ornementation résulte en général d'un dépôt d'émail, réalisé sur la face intérieure de l'élément vitré lorsqu'il est monolithique ou sur une face intercalaire du vitrage pour les vitrages composites, mais elle peut également résulter d'une coloration partielle et/ou périphérique d'une feuille de matière utilisée, notamment d'une feuille en matière organique.

Lorsque l'élément vitré est en matière organique, il a été fabriqué préalablement à la mise en œuvre de l'invention par moulage de la matière constitutive de l'élément vitré dans un dispositif de moulage comportant un moule comportant au moins une partie fixe de moule et une partie mobile de moule qui est mobile par rapport à la partie fixe de moule, lesdites parties de moule coopérant à l'état fermé du moule, pendant l'étape de moulage, pour former une cavité de moulage présentant en coupe la forme en coupe de l'élément vitré. Souvent, l'élément vitré en matière organique n'est pas plat mais bombé.

Lorsque l'élément vitré est en matière minérale, il a été fabriqué préalablement à la mise en œuvre de l'invention par fusion de matière minérale en une feuille plate, puis par découpe de cette feuille et éventuellement bombage et/ou trempe de cette feuille.

Lorsque l'élément vitré est un élément vitré composite, il a été fabriqué selon la technique bien connue de fabrication des vitrages multiples ou des vitrages feuilletés, bombés.

Sur la figure 2, l'élément vitré 2 est un vitrage feuilleté, bombé. C'est ici un pare-brise d'un véhicule automobile.

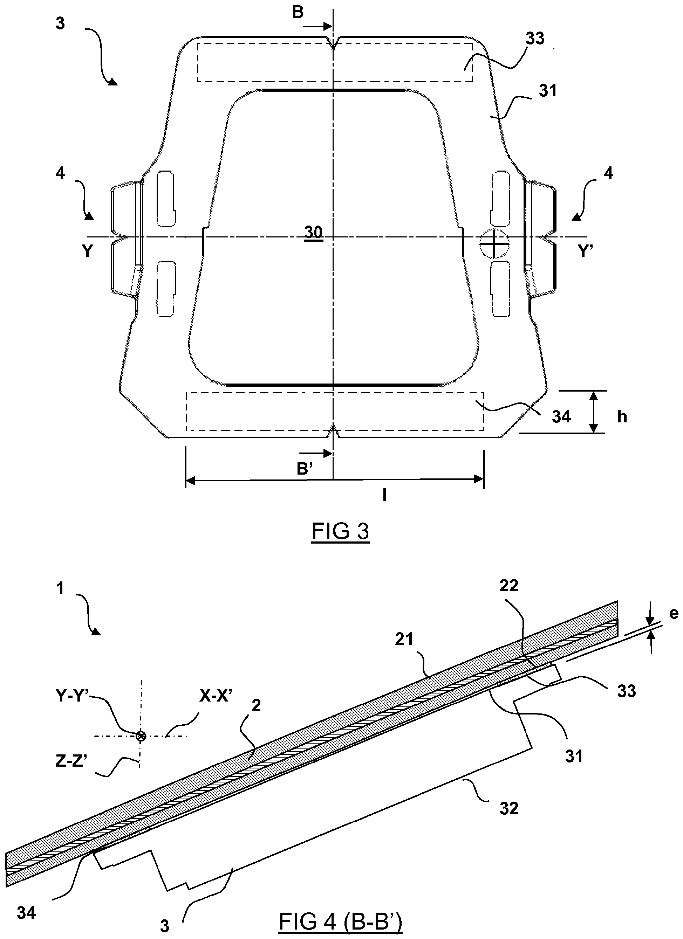

La présente invention se rapporte à un vitrage 1, et notamment un vitrage de véhicule tel que celui visible sur la figure 4.

Le vitrage 1 selon l'invention est identique au vitrage 1' illustré en figure 3, sauf en ce qu'il comporte une embase 3 selon l'invention. Les éléments techniques du vitrage 1' de l'art antérieur qui peuvent être repris à l'identique pour le vitrage 1 selon l'invention comportent la même référence dans tout le présent document. En particulier l'élément vitré 2 peut être identique.

Comme pour les vitrages 1', chaque vitrage 1 de véhicule selon l'invention comporte, comme visible en figure 4, un élément vitré 2 et au moins une embase 3 pour l'attachement réversible d'un accessoire (non illustré) audit élément vitré 2, ladite embase 3 comportant un trou 30 pour le passage dudit accessoire ou d'une partie dudit accessoire, ladite embase 3 présentant une face extérieure 31 non plate qui est fixée en vis-à-vis d'une face intérieure 22 non plate dudit élément vitré 2.

La matière de l'embase est la même ; il s'agit par exemple d'un alliage métallique ayant subit une anodisation.

Par contre, contrairement aux vitrages 1', la face extérieure 31 de l'embase 3 selon l'invention ne comporte pas, autour du trou 30, un bossage périphérique.

En outre, la face extérieure 31 ne va pas en s'évasant de manière centrifuge, mais elle présente la même courbure que ladite face intérieure 22 de l'élément vitré 2 à l'endroit où l'embase est fixée à l'élément vitré.

La face extérieure 31 et la face intérieure 22 sont ainsi parallèles : En coupe, l'angle entre la face extérieure 31 de l'embase et la face intérieure 22 de l'élément vitré est donc toujours infini.

Avantageusement, si à l'endroit où doit être positionnée l'accessoire la face intérieure 22 de l'élément vitré est peu courbée, avec un rayon de courbure selon la verticale et/ou selon l'horizontal très grand(s) (au moins 2 mètres), alors la face extérieure 31 de l'embase est elle aussi peu courbée ; il est donc possible qu'une même embase puisse servir à plusieurs modèles d'éléments vitrés si l'endroit choisi pour le positionnement de l'embase est peu courbé pour tous ces modèles.

Selon l'invention, ladite face extérieure 31 comporte deux bandes adhésives 33, 34, et uniquement deux, présentant chacune une forme allongée et disposées toutes les deux allongées selon l'axe horizontal transversal Y-Y' dudit vitrage.

La comparaison de la figure 4 avec la figure 2 montre que l'embase 3 selon l'invention n'est pas fixée par collage à la face intérieure de l'élément vitré à l'aide une couche de polyuréthane qui serait disposée contre toute la face extérieure 31, mais que l'embase 3 selon l'invention est fixée par collage à l'aide uniquement de deux bandes adhésives 33, 34.

Toutefois, ces deux bandes ne sont pas disposées n'importe comment : elles sont disposées allongées selon la direction du vitrage selon laquelle il y a le moins de dispersion de dimension d'un élément vitré à un autre d'une même série : elles disposées toutes les deux allongées selon l'axe horizontal transversal Y-Y'.

Ainsi, l'invention limite le risque qu'une bande adhésive ne soit pas bien en contact avec la surface intérieure de l'élément vitré adjacente.

De fait, pour la mise en œuvre de l'invention, il est préférable de ne pas prévoir de bande(s) adhésive(s) allongée(s) selon l'axe vertical Z-Z' dudit vitrage.

Les deux bandes adhésives sont par ailleurs, de préférence, disposées selon la direction horizontale Y-Y' entre les moyens d'attachement qui permettent d'attacher mécaniquement d'une manière réversible ledit accessoire à ladite embase lorsque ces moyens d'attachement sont disposés de part et d'autre de ladite embase selon l'axe horizontal transversal Y-Y' dudit vitrage.

Chaque bande adhésive 33, 34 est, par exemple, à base d'un mélange de résine époxy et de résine acrylique. Un tel mélange de résine polymérise à une température d'environ 150 °C en une durée d'environ 20 minutes.

Comme ces deux conditions sont remplies lors de la fabrication d'un vitrage feuilleté (et plus précisément lors de l'étape de feuilletage / assemblage des feuilles ensemble), il est alors possible de positionner une embase selon l'invention munie de deux bandes adhésives qui n'ont pas encore polymérisées contre la face intérieure d'un élément vitré avant que cet élément vitré ne subisse l'étape de feuilletage (passage en étuve) : les deux bandes adhésives peuvent ainsi polymériser pendant l'étape de feuilletage, en temps masqué.

Les deux bandes adhésives 33, 34 présentent toutes les deux les mêmes dimensions :
- une longueur I d'environ 6 cm
- un hauteur h d'environ 1 cm, et
- une épaisseur e d'environ 0,5 mm.

Les deux bandes sont chacune en forme de rectangle : la hauteur est identique suivant la longueur ; l'épaisseur est en outre constante.

Elles sont positionnées parallèles entre elles et parallèles aux bords supérieur et inférieur de l'embase. Elles sont positionnées de part et d'autre du trou 30, au-dessus et en dessous du trou lorsque l'on considère l'orientation verticale Z-Z'.

Le trou 30 est au centre de la face extérieure de l'embase avec une surface extérieure présentant à peu près la même largeur tout autour du trou.

Chaque bande adhésive présente ainsi une surface de l'ordre de 6 cm² pour une surface de face extérieure 31 d'embase de l'ordre de 24 cm².

La surface totale des deux bandes adhésives 33, 34 représente environ la moitié (± 1/10^{e}) de la surface de la face extérieure 31 de l'embase.

La face extérieure 31 de l'embase est en forme générale de parallélogramme, de rectangle ou carré ou losange, qui est ajourée en son centre, mais elle n'est pas ronde ; le trou 30 est de préférence ménagé en son centre, de telle sorte que de la matière de la face extérieure de l'embase entoure complètement le trou ; toutefois, il n'est pas exclu que la face extérieure 31 ne soit pas complètement périphérique tout autour du trou.

Par exemple, avec l'invention, il n'est plus vraiment nécessaire de prévoir de face extérieure 31 sous les moyens d'attachement 4. Dans ce cas, bien sûr, le rapport entre la surface totale des deux bandes adhésives et la surface de la face extérieure 31 de l'embase est réduit en conséquence.

Des essais de fatigue ont montré que la fixation réalisée par les bandes adhésives 33, 34 est extrêmement fiable à l'usage ; plus fiable que la solution de l'art antérieur illustrée aux figures 1 et 2.

Pour augmenter encore la fiabilité de la fixation de l'embase à l'élément vitré, il est possible qu'au moins une bande adhésive comporte à ses deux extrémités longitudinales selon l'axe horizontal transversal Y-Y', un retour.

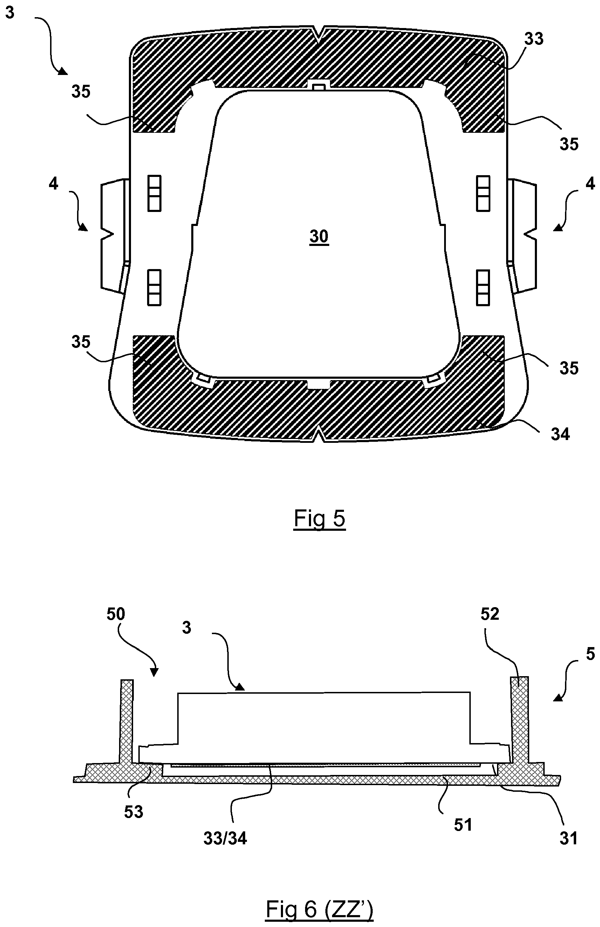

La figure 5 illustre une variante de réalisation avec une fixation encore plus fiable.

Dans cette variante illustrée, les deux bandes adhésives 33, 34 comportent à leurs deux extrémités longitudinales selon l'axe horizontal transversal Y-Y', un retour 35, les deux retours de la bande adhésive 33 supérieure étant orientés vers le bas dans la direction de l'axe vertical Z-Z' et les deux retours de la bande adhésive 34 inférieure étant orientés vers le haut dans la direction de l'axe vertical Z-Z'.

Ainsi, les bandes adhésives 33, 34 sont positionnées tête-bêche avec les retours respectifs s'étendant dans des directions et sens convergeant selon l'axe vertical Z-Z'.

Pour simplifier le référencement des bandes adhésives, il est possible que la forme de la bande adhésive 33 supérieure soit symétrique de la forme de la bande adhésive 34 inférieure par rapport à l'axe horizontal transversal Y-Y'.

Sur la figure 5, c'est le cas : la forme de la bande adhésive 33 supérieure est la symétrique de la forme de la bande adhésive 34 inférieure par rapport à l'axe horizontal transversal Y-Y' car la bande adhésive 33 supérieure présente une longueur identique selon l'axe horizontal transversal Y-Y' à la longueur de la bande adhésive 34 inférieure et une largeur identique selon l'axe central Z-Z' à la largeur de la bande adhésive 34 inférieure.

Comme visible en figure 6, la présente invention propose d'utiliser un plateau formé, par exemple en matière plastique et thermoformé, pour le transport des embases avant leur fixation aux éléments vitrés.

Les embases 3 sont ainsi positionnées chacune dans un logement 50 délimité par un fond 51 et des parois verticales 52. La distance entre les parois verticales est approximativement la largeur et la longueur hors tout de l'embase, afin que les embases soient maintenues latéralement par les parois lors de leur transport.

Les bandes adhésives 33, 34, ne sont pas en contact avec le fond 51 car un épaulement 53 est prévu en périphérie du fond pour relever d'environ 1 à 2 mm les embases par rapport au fond.

Dans les logements, la face inférieure des bandes adhésives 33, 34, celle qui est orientée en direction du fond 51, est éventuellement protégée par une pellicule de protection (encore appelée « liner ») qui a été positionnée avant les embases, dans le fond des logements.

Dans cette variante, il est possible de prévoir que les embases soient directement en contact avec la pellicule de protection et que des épaulements sont prévus pour maintenir verticalement les embases sur la pellicule de protection, en particulier pendant leur transport jusqu'à l'atelier de positionnement sur les éléments vitrés.

Les plateaux 5 peuvent comporter par exemple une cinquantaine de logements, et donc autant d'embases ; ils sont réutilisable pour une même série d'embase.

Chaque plateau possède une encoche de détrompage qui sert au référencement dans l'espace afin de permettre à un système automatiser de saisir chaque embase puis de la positionner sur un vitrage. Lorsque les embases ne sont pas au contact d'une pellicule de protection, il est plus facile de gérer la préhension de chaque embase par un robot car il n'est alors pas nécessaire de prévoir de mouvement particulier pour « décoller » l'embase de la pellicule de protection : même si l'adhésion de l'embase sur la pellicule de protection n'est pas très forte, il faut quand même la vaincre et faire un mouvement particulier pour saisir une embase sans aucun morceau de pellicule de protection.

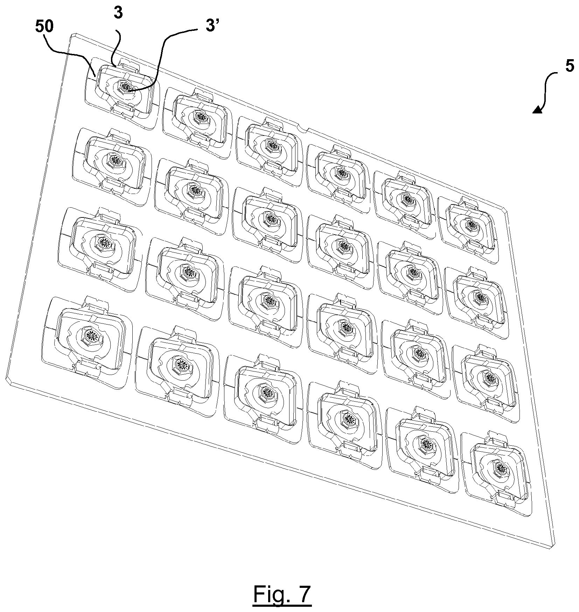

La figure 7 illustre une vue en perspective d'un plateau comportant 24 logements 50, avec dans chaque logement deux embases différentes : une embase 3 pour un capteur du type de celle présentée en figures 3 et 4 et dans le trou de cette embase, une seconde embase 3', circulaire, pour un rétroviseur intérieur.

Cette solution permet un gain de place en atelier et facilite l'approvisionnement.

## Revendications

1. Vitrage (1) de véhicule comportant un élément vitré (2) et au moins une embase (3) pour l'attachement réversible d'un accessoire audit élément vitré (2), ladite embase (3) comportant un trou (30) pour le passage dudit accessoire, ladite embase (3) présentant une face extérieure (31) non plate qui est fixée en vis-à-vis d'une face intérieure (22) non plate dudit élément vitré (2), ladite face extérieure (31) et ladite face intérieure (22) non plates présentant deux rayons de courbure, un premier rayon de courbure non infini selon l'axe horizontal transversal Y-Y' dudit vitrage, qui est aussi l'axe horizontal transversal dudit véhicule, et un second rayon de courbure non infini dans une seconde direction qui est perpendiculaire à la première, une hauteur Z-Z', **caractérisé en ce que** ladite face extérieure (31) comporte uniquement deux bandes adhésives (33, 34) présentant chacune une forme allongée et disposées toutes les deux allongées selon l'axe horizontal transversal Y-Y' dudit vitrage.

2. Vitrage (1) selon la revendication 1, **caractérisé en ce que** ladite face extérieure (31) de l'embase (3) suit la même courbure que ladite face intérieure (22) de l'élément vitré (2) à l'endroit où l'embase est fixée à l'élément vitré.

3. Vitrage (1) selon la revendication 1 ou 2, **caractérisé en ce que** chaque bande adhésive (33, 34) est à base d'un mélange de résine époxy et de résine acrylique.

4. Vitrage (1) selon l'une quelconque des revendications 1 à 3, **caractérisé en ce que** ladite face extérieure (31) ne comporte pas de bossage périphérique autour du trou (30).

5. Vitrage (1) selon l'une quelconque des revendications 1 à 4, **caractérisée en ce que** les bandes adhésives (33, 34) présentent les mêmes dimensions de longueur I, hauteur h et épaisseur e.

6. Vitrage (1) selon l'une quelconque des revendications 1 à 5, **caractérisé en ce que** les bandes adhésives (33, 34) sont positionnées sensiblement parallèles.

7. Vitrage (1) selon l'une quelconque des revendications 1 à 6, **caractérisé en ce que** au moins une bande adhésive comporte à ses deux extrémités longitudinales selon l'axe horizontal transversal Y-Y', un retour (35).

8. Vitrage (1) selon la revendication 7, **caractérisé en ce que** les deux bandes adhésives (33, 34) comportent à leurs deux extrémités longitudinales selon l'axe horizontal transversal Y-Y', un retour (35) **et en ce que** les bandes adhésives (33, 34) sont positionnées tête-bêche.

9. Vitrage (1) selon l'une quelconque des revendications 1 à 8, **caractérisé en ce que** la surface totale des deux bandes adhésives (33, 34) représente environ la moitié de la surface de la face extérieure (31).

10. Vitrage (1) selon l'une quelconque des revendications 1 à 9, **caractérisé en ce que** ledit élément vitré (2) est un élément vitré feuilleté.

11. Procédé de fabrication d'un vitrage (1) selon l'une quelconque des revendications 1 à 10 comportant un élément vitré (2) et au moins une embase (3) pour la fixation d'un accessoire, **caractérisé en ce que** ladite embase est collée à la face intérieure (22) de l'élément vitré (2) grâce à uniquement deux bandes adhésives (33, 34) située sur la face extérieure (31) de l'embase (3), lesdites bandes adhésives (33, 34) présentant chacune une forme allongée et étant disposées toutes les deux allongées selon l'axe horizontal transversal Y-Y' dudit vitrage.

12. Procédé de fabrication d'un vitrage (1) selon la revendication 11,
**caractérisé en ce que** ledit élément vitré (2) est un élément vitré feuilleté **et en ce que** la fixation de l'embase est opérée lors de l'opération de feuilletage.

## Patentansprüche

1. Scheibe (1) eines Fahrzeugs mit einem Glaselement (2) und mindestens einem Befestigungselement (3) zur reversiblen Befestigung eines Zubehörs an dem genannten Glaselement (2), wobei das genannte Befestigungselement (3) ein Loch (30) für den Durchgang des genannten Zubehörs aufweist, wobei das genannte Befestigungselement (3) eine nicht flache Außenseite (31) aufweist, die gegenüber einer nicht flachen Innenseite (22) des genannten Glaselements (2) befestigt ist, wobei die genannte nicht flache Außenseite (31) und die nicht flache genannte Innenseite (22) zwei Krümmungsradien, einen ersten nicht unendlichen Krümmungsradius entlang der horizontalen Querachse Y-Y' der genannten Scheibe, die auch die horizontale Querachse des genannten Fahrzeugs ist, und einen zweiten nicht unendlichen Krümmungsradius in einer zweiten Richtung, die senkrecht zur ersten ist, eine Höhe Z-Z' aufweisen, **dadurch gekennzeichnet, dass** die genannte Außenseite (31) nur zwei Klebestreifen (33, 34) umfasst, die jeweils eine längliche Form aufweisen und beide länglich entlang der horizontalen Querachse Y-Y' der genannten Scheibe angeordnet sind.

2. Scheibe (1) nach Anspruch 1, **dadurch gekennzeichnet, dass** die genannte Außenseite (31) des Befestigungselements (3) der gleichen Krümmung folgt wie die genannte Innenseite (22) des Glaselements (2), wobei das Befestigungselement am Glaselement befestigt ist.

3. Scheibe (1) nach Anspruch 1 oder 2, **dadurch gekennzeichnet, dass** jeder Klebestreifen (33, 34) auf einer Mischung aus Epoxidharz und Acrylharz basiert.

4. Scheibe (1) nach einem der Ansprüche 1 bis 3, **dadurch gekennzeichnet, dass** die genannte Außenseite (31) keine Umfangsnabe um das Loch (30) aufweist.

5. Scheibe (1) nach einem der Ansprüche 1 bis 4, **dadurch gekennzeichnet, dass** die Klebestreifen (33, 34) die gleichen Abmessungen von Länge I, Höhe h und Dicke e aufweisen.

6. Scheibe (1) nach einem der Ansprüche 1 bis 5, **dadurch gekennzeichnet, dass** die Klebestreifen (33, 34) im Wesentlichen parallel angeordnet sind.

7. Scheibe (1) nach einem der Ansprüche 1 bis 6, **dadurch gekennzeichnet, dass** mindestens ein Klebestreifen an seinen zwei Längsenden entlang der horizontalen Querachse Y-Y' eine Rückführung (35) umfasst.

8. Scheibe (1) nach Anspruch 7, **dadurch gekennzeichnet, dass** die zwei Klebestreifen (33, 34) an ihren zwei Längsenden entlang der horizontalen Querachse Y-Y' eine Rückführung (35) umfassen, **und dadurch, dass** die Klebestreifen (33, 34) auf den Kopf gestellt positioniert sind.

9. Scheibe (1) nach einem der Ansprüche 1 bis 8, **dadurch gekennzeichnet, dass** die Gesamtfläche der zwei Klebestreifen (33, 34) etwa die Hälfte der Fläche der Außenseite (31) ausmacht.

10. Scheibe (1) nach einem der Ansprüche 1 bis 9, **dadurch gekennzeichnet, dass** das genannte Glaselement (2) ein laminiertes Glaselement ist.

11. Verfahren zur Herstellung einer Scheibe (1) nach einem der Ansprüche 1 bis 10, umfassend ein Glaselement (2) und mindestens ein Befestigungselement (3) zum Befestigen eines Zubehörs, **dadurch gekennzeichnet, dass** das genannte Befestigungselement mit nur zwei Klebestreifen (33, 34), die sich auf der Außenseite (31) des Befestigungselements (3) befinden, auf die Innenseite (22) des Glaselements (2) geklebt wird, wobei die genannten Klebestreifen (33, 34) jeweils eine längliche Form aufweisen und beide länglich entlang der horizontalen Querachse Y-Y' der genannten Scheibe angeordnet sind.

12. Verfahren zur Herstellung einer Scheibe (1) nach Anspruch 11, **dadurch gekennzeichnet, dass** das genannte Glaselement (2) ein laminiertes Glaselement ist, **und dass** die Befestigung des Befestigungselements während des Laminiervorgangs durchgeführt wird.

## Claims

1. A vehicle glazing unit (1) having a glazed element (2) and at least one base (3) for the reversible attachment of an accessory to said glazed element (2), said base (3) having an aperture (30) for the passage of said accessory, said base (3) having a non-flat outer face (31) which is fastened opposite a non-flat inner face (22) of said glazed element (2), said non-flat outer face (31) and said non-flat inner face (22) having has two radii of curvature, namely a first, non-infinite radius of curvature in a first direction, the lateral direction Y-Y' of said glazing that is also the lateral direction of said vehicle, and a second non-infinite radius of curvature in a second direction, the height Z-Z', which is perpendicular to the first, **characterized in that** said outer face (31) has only two adhesive strips (33, 34) each having an elongate shape and both positioned lengthwise along the transverse horizontal axis Y-Y' of said glazing unit.

2. The glazing unit (1) as claimed in claim 1, **characterized in that** said outer face (31) of the base (3) follows the same curvature as said inner face (22) of the glazed element (2) at the location where the base is fastened to the glazed element.

3. The glazing unit (1) as claimed in claim 1 or 2, **characterized in that** each adhesive strip (33, 34) is based on a mixture of epoxy resin and acrylic resin.

4. The glazing unit (1) as claimed in any one of claims 1 to 3, **characterized in that** said outer face (31) has no peripheral ridge around the aperture (30).

5. The glazing unit (1) as claimed in any one of claims 1 to 4, **characterized in that** the adhesive strips (33, 34) have the same dimensions in terms of length I, height h and thickness e.

6. The glazing unit (1) as claimed in any one of claims 1 to 5, **characterized in that** the adhesive strips (33, 34) are positioned substantially parallel to each other.

7. The glazing unit (1) as claimed in any one of claims 1 to 6, **characterized in that** at least one adhesive strip has an angled part (35) at each of its two longitudinal ends along the transverse horizontal axis Y-Y'.

8. The glazing unit (1) as claimed in claim 7, **characterized in that** each of the two adhesive strips (33, 34) has an angled part (35) at each of its two longitudinal ends along the transverse horizontal axis Y-Y', and **in that** the adhesive strips (33, 34) are positioned head to tail.

9. The glazing unit (1) as claimed in any one of claims 1 to 8, **characterized in that** the total surface area of the two adhesive strips (33, 34) represents approximately one half of the surface area of the outer face (31).

10. The glazing unit (1) as claimed in any one of claims 1 to 9, **characterized in that** said glazed element (2) is a laminated glazed element.

11. A method for manufacturing a glazing unit (1) as claimed in any one of claims 1 to 9 having a glazed element (2) and at least one base (3) for fastening an accessory, **characterized in that** said base is bonded to the inner face (22) of the glazed element (2) by means of only two adhesive strips (33, 34) located on the outer face (31) of the base (3), each of said adhesive strips (33, 34) having an elongate shape and both strips being positioned lengthwise along the transverse horizontal axis Y-Y' of said glazing unit.

12. The method for manufacturing a glazing unit (1) as claimed in claim 11, **characterized in that** said glazed element (2) is a laminated glazed element and **in that** the fastening of the base is carried out during the laminating operation.
